# EUROPEAN PATENT APPLICATION

(11) **EP 4 759 475 A1**
(43) Date of publication of application: **17.06.2026**
(21) Application number: 25218926.1
(22) Date of filing: 27.11.2025
(51) Int. Cl.: B23Q 1/03, B23Q 3/08

(54) **WORKPIECE SUPPORT DEVICE FOR A MACHINING CENTER**

(30) Priority: 12.12.2024 IT 202400028284
(71) Applicant: C.M.S. S.p.A., 24019 Zogno (BG) (IT)
(72) Inventor: GHISALBERTI, Oliviero, 24019 Zogno (BG) (IT); FUSTINONI, Roberto, 25036 Palazzolo sull'Oglio (BS) (IT); BALDI, Francesco, 24123 Bergamo (BG) (IT)
(74) Representative: Luppi Intellectual Property S.r.l.

(57) **Abstract**

A support device for supporting workpieces and a machining center including said support device are described, wherein two or more support bars are arranged above a horizontal worktable parallel to one another and are slidably coupled to guiding means with the ability to perform transverse movements so that they can be approached and moved away from one another, each support bar carrying two or more movable suction cup locking devices with the ability to slide along a longitudinal axis of the respective support bar, each locking device comprising an upper end engageable with the workpiece and a lower end engageable with the worktable, blowing means configured to generate an air cushion at the lower end of each locking device to facilitate its movement on the worktable.

## Description

### Background of the invention

The invention relates to a support device for a machining center and a machining center that includes such a device.

Specifically, but not exclusively, the invention can be used for machining workpieces in sheet form, particularly stone, ceramic, or glass.

### Prior art

The prior art includes machining centers suitable for machining sheet-like workpieces, such as stone, ceramic, or glass slabs, in which the workpiece is secured to a work surface, or table, of the machining center using suction cups.

Typically, when switching from one machining operation to another, the suction cups must be repositioned appropriately for the new operation. To this end, they are moved across the work surface and connected to the vacuum hoses manually.

These operations, necessary for process changing, can typically take an experienced operator ten to fifteen minutes.

Furthermore, the operator is often required to step onto the work surface to position the suction cups furthest away, as well as handle the air hoses, sometimes to untangle a veritable tangle.

The prior art comprises a solution, suitable for automatic processing lines, with a bar table that can be used for the automatic positioning of the suction cups. This automatic bar table of the known type allows for a format change in a couple of minutes without operator intervention. However, this solution, while improving on the prior art, has some drawbacks, such as, for example, a limit on the maximum number of suction cups that can be used, as well as a high purchase cost and a burdensome maintenance effort.

### Summary of the invention

One purpose of the invention is to propose a solution capable of overcoming one or more of the aforementioned limitations and drawbacks of the prior art.

One purpose of the invention is to provide an alternative solution to the problem of positioning the suction cups when changing the workpiece format.

One purpose of the invention is to significantly reduce the time required for an operator to perform the various operations to adjust the worktable to the workpiece format change, compared to performing them manually.

One advantage is to create a worktable that is structurally simple and economical, and that is remarkably quick and practical to use.

One advantage is to offer an economical yet reliable and precise solution to facilitate workpiece format change in a machining center.

One advantage is to allow the suction cups, even the most distant ones, to be positioned without the operator having to enter the work surface, without having to handle the air hoses, and without tangling them.

These purposes and advantages, and more, are achieved by a workpiece support device according to one or more of the claims listed below and by a machining center that includes the aforementioned support device.

In one example, a support device comprises two or more support bars that are arranged on a work surface next to each other and that are slidably coupled to guiding means with the ability to move in such a way that they can be approached and moved away from each other, wherein on each support bar are arranged two or more locking devices with the ability to slide along a longitudinal axis of the respective support bar, each locking device comprising an upper end configured to engage by suction with the workpiece and a lower end configured to engage by suction with the work surface.

It is possible to provide, for each locking device, that the respective lower end can selectively assume an engagement configuration, in which it engages with the work surface by suction, and a disengagement configuration, in which it disengages from the work surface by means of a blow that generates an air cushion that allows a sort of support or floating of the device itself, facilitating its movement on the work surface.

The aforementioned movements, which the various support bars can perform to move closer to or further away from each other, can be easily performed manually by an operator, especially by activating the aforementioned disengagement configuration of the locking devices of the respective support bar to be moved.

Pneumatic selecting means may be configured to selectively switch between a configuration of engagement with the work surface and a configuration of disengagement from the work surface.

The pneumatic selecting means may comprise a pneumatic selector operatively associated with each locking device to control the respective locking device and/or a pneumatic selector operatively associated with each support bar to control all the locking devices of the respective support bar with a single command.

The positioning operation of the locking devices may be guided by the use of suitable instruction means to guide (step by step) an operator. Such guided instruction means may comprise, in particular, a projection system (e.g., a laser projector) configured to project visual signals onto the work surface, for example, at the different pre-established positions that the various locking devices must assume. Such guided instruction means may comprise, in particular, software configured to provide guidance information on a graphical user interface (operator panel).

To facilitate the positioning operation, the various locking devices may be provided with identification signals, such as a progressive numbering clearly visible to the operator.

In the example that will be illustrated in more detail below, the support device comprises five support bars, each of which supports four locking devices. The number of locking devices per support bar may be expandable. However, it is possible to provide support devices with a greater or lesser number of support bars and/or with a greater or lesser number of locking devices for each support bar.

Each support bar may comprise, in particular, an aluminum extrusion. Each support bar may be slidably supported by linear sliding guides, for example of the recirculating ball type. The sliding guides may be fixed to the work surface.

The sliding guiding means may be arranged on a peripheral side (rear, opposite the operator's side) of the work surface.

The work surface may comprise, in particular, an aluminum plate.

Each support bar may be equipped with a handle with a release control (button) that deactivates the vacuum function and/or activates the blow-off function for the locking devices carried by the respective support bar, which causes a disengagement configuration of this set of locking devices from the work surface below, for example by interrupting the generation of vacuum for the suction socket and/or by generating an air cushion.

Each support bar can be easily moved manually on the work surface using the aforementioned handle (with release control).

In this disengagement configuration, the locking devices, which are supported by the respective support bar, may rest on the work surface with the interposition of an air cushion, which acts as support and floatation for the devices themselves, and may be easily moved by sliding along the longitudinal axis of the respective support bar. The various locking devices may be easily moved manually by an operator, possibly using a suitable tool (for example, a rod, a stick, or similar) to push and/or pull each locking device.

The support bars and locking devices may be positioned on the work surface manually by an operator, or alternatively they may be positioned automatically using the numerical control of the machining center.

To perform automatic positioning, it is possible to use a gripping system (e.g., a suction cup system) that may be coupled to a machining head of the machining center (e.g., via a cone attachment) and that may be moved by the machining head itself.

Automatic positioning may be performed in a different (simpler) manner, in particular without the use of the aforementioned gripping system coupled to the machining head, using instead a flat element, for example, a sheet of sufficient size to attach to the locking device (suction cup), which may be coupled to a machining head of the machining center (e.g., via a cone attachment) and that may be moved by the machining head itself.

In practice, the flat element, on the one hand, is attached to the machining head (via a mechanical coupling) and, on the other hand, is attached to the locking device (via suction) using the suction gripping function generated by the locking device itself that will be moved. The machining head may then drag and position the locking device.

The aforementioned flat element essentially serves as an interface element suitable for integrally connecting the machining head to each locking device for automatic positioning using the machining center's numerical control.

A pneumatic circuit may be provided to supply vacuum to engage the locking devices to the worktable and/or to supply blow to disengage the locking devices from the worktable. The pneumatic circuit may include cables carried by cable chains arranged on one perimeter side of the worktable. The pneumatic circuit may be protected by a casing. It is possible to provide for the same casing to protect both the aforementioned pneumatic circuit and the guiding means to which the support bars are slidably coupled.

Thanks to the aforementioned solution, it is possible to eliminate the use of fluid transport pipes resting on the worktable, since the supply pipes (for the blow and/or vacuum passage) can pass through the cable chains and then pass over the various support bars, for example, via a series of bridge connections arranged between the various locking devices.

It is possible to exclude from operation any locking devices that may not be necessary from time to time, for example due to the particular shape and size of the workpiece being machined, by adopting cut-off valves mounted on the various locking devices to interrupt the vacuum and/or blow supply. These cut-off valves may be controlled manually or by the numerical control of the machining center.

The proposed solution allows the worktable to be prepared in a relatively short time. Specifically, it is possible to perform a change quickly and easily (for example, in less than ten minutes) using a simple, economical, and highly reliable solution that is easy for operators to learn and understand. It is also possible to envision implementation examples where the positioning of the locking devices occurs completely automatically.

### Brief description of the drawings

The invention can be better understood and implemented with reference to the attached drawings, which illustrate a non-limiting example of an embodiment, in which:

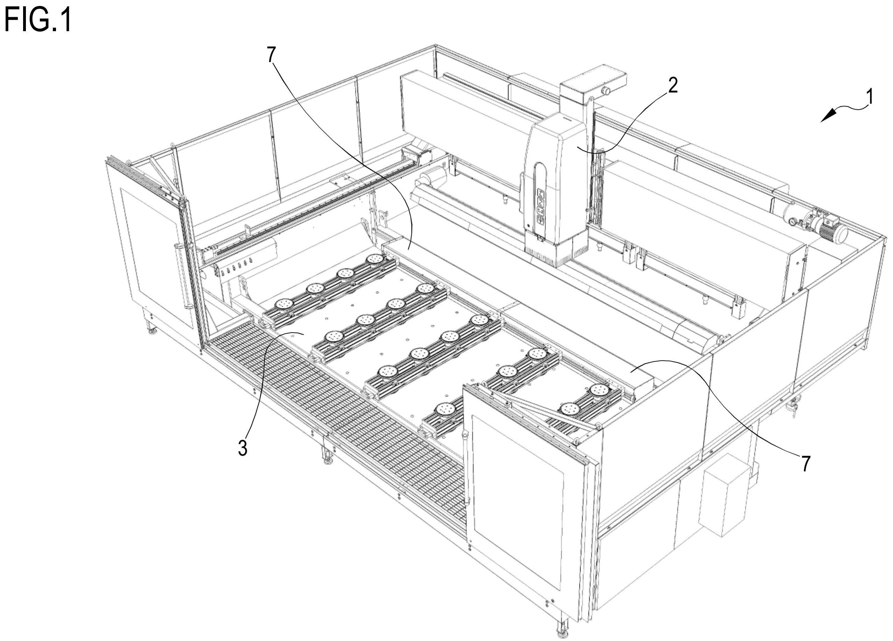

- Figure 1 is a perspective view of an example of a machining center with a support device made in accordance with the present invention;

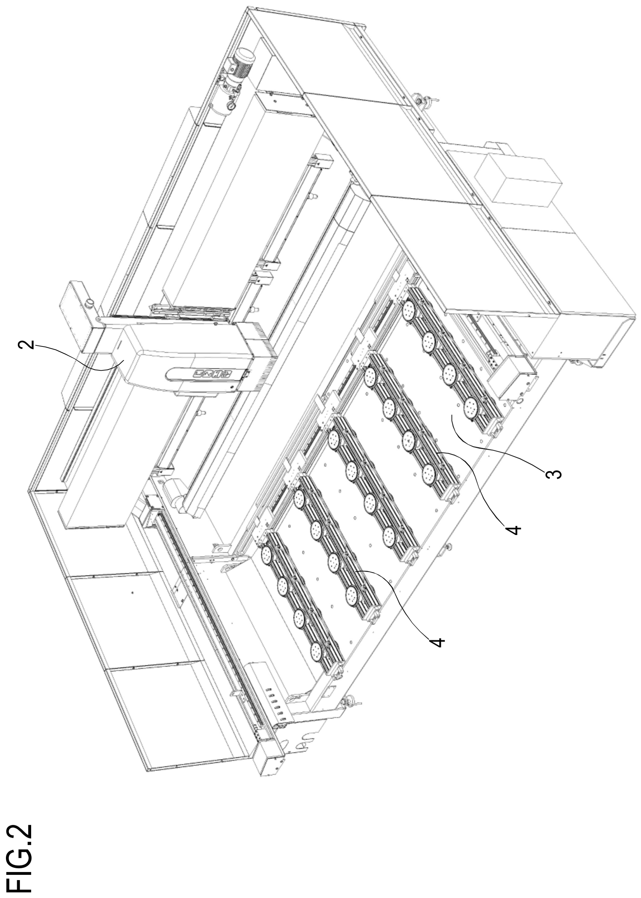

- Figure 2 is a perspective view of the machining center of Figure 1 with some parts removed to better highlight others;

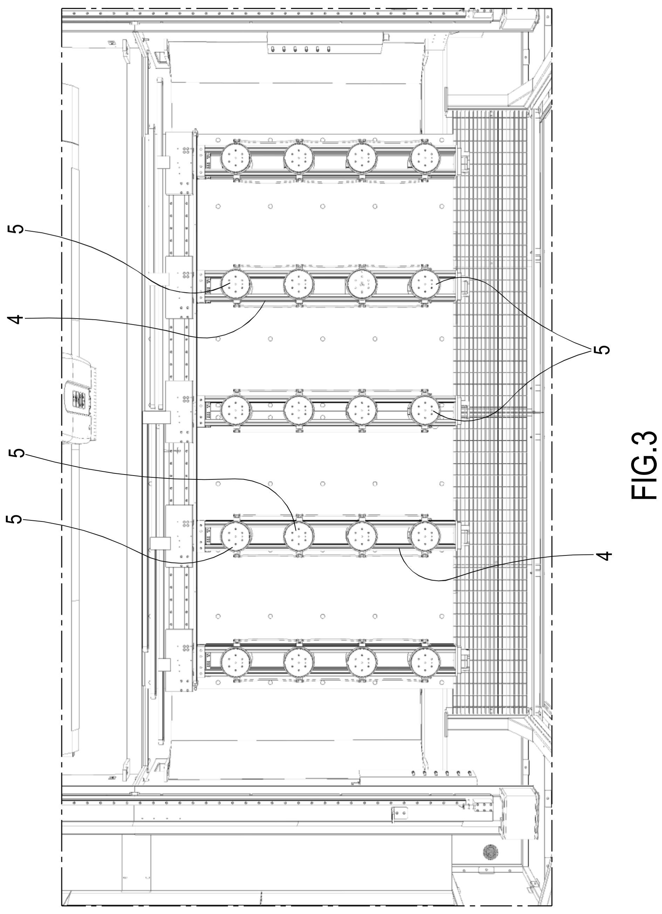

- Figure 3 is a partial top plan view of the machining center of Figure 1;
- Figure 4 is a perspective view of an enlarged detail of the machining center of Figure 1, in which the work surface is visible;
- Figure 5 shows a further enlarged detail, compared to the enlargement of Figure 4, of the machining center of Figure 1;

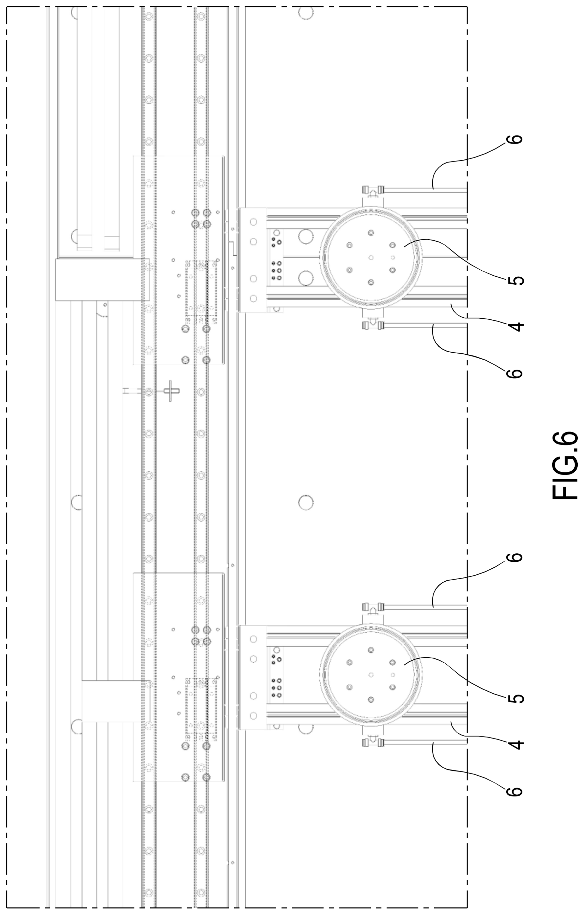

- Figure 6 is a top plan view of an enlarged detail of the machining center of Figure 1;

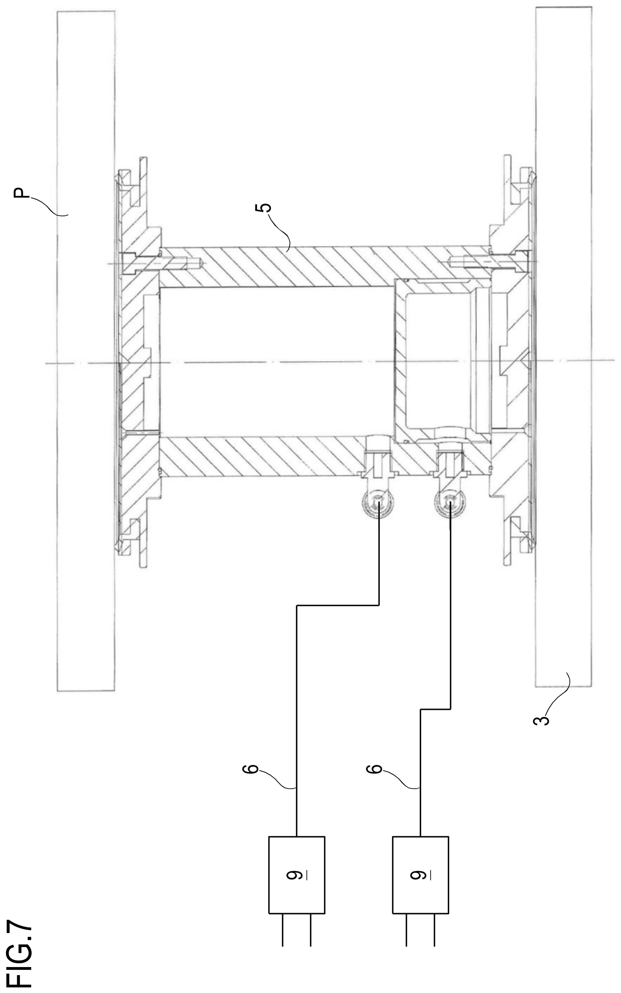

- Figure 7 is a vertical sectional view of an example of a locking device that can be used to create the support device shown in Figure 1.

### Detailed description

With reference to the aforementioned figures, the reference numeral 1 generally indicates a machining center for the machining of workpieces, for example, workpieces in the form of slabs, in particular for the machining of stone, ceramic, or glass slabs or other stone materials, composite materials, etc.

The machining center 1 may comprise, in particular, a numerically controlled machining center. The machining center 1 may comprise, in particular, at least one machining head 2 configured to perform a machining operation (for example, by removing material) on a slab. The machining head 2 may be movable with two, or three, or more than three controlled axes. It is possible, in particular, to provide that the numerical control of the machining center 1 is equipped with at least four or five controlled axes (for example, three linear axes X, Y, Z and one or two rotary axes C1, C2).

The machining center 1 comprises a support device configured to support a workpiece P (e.g., a sheet metal). The support device comprises a horizontal work surface 3.

The support device comprises two or more support bars 4 arranged above the work surface 3. Each support bar 4 extends in length along a respective longitudinal (horizontal) axis. The support bars 4 are arranged (parallel to each other) next to each other. In particular, the various support bars 4 are arranged coplanar on a horizontal plane above the work surface 3. The support bars 4 are supported by sliding guiding means (linear) with the possibility of performing transverse movements with respect to the respective longitudinal axis so as to be able to approach and move away from each other. The sliding guiding means may comprise, in particular, one or more recirculating ball guides. In particular, the sliding guiding means define a horizontal sliding axis orthogonal to the longitudinal axes of the support bars 4. Each support bar 4 may slide laterally, i.e., in a direction orthogonal to its length.

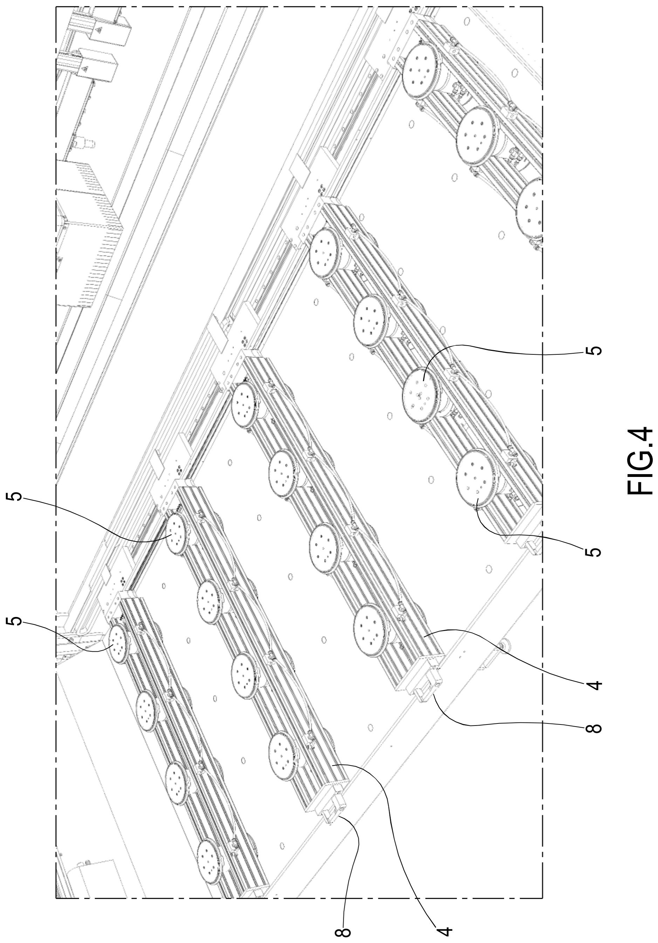

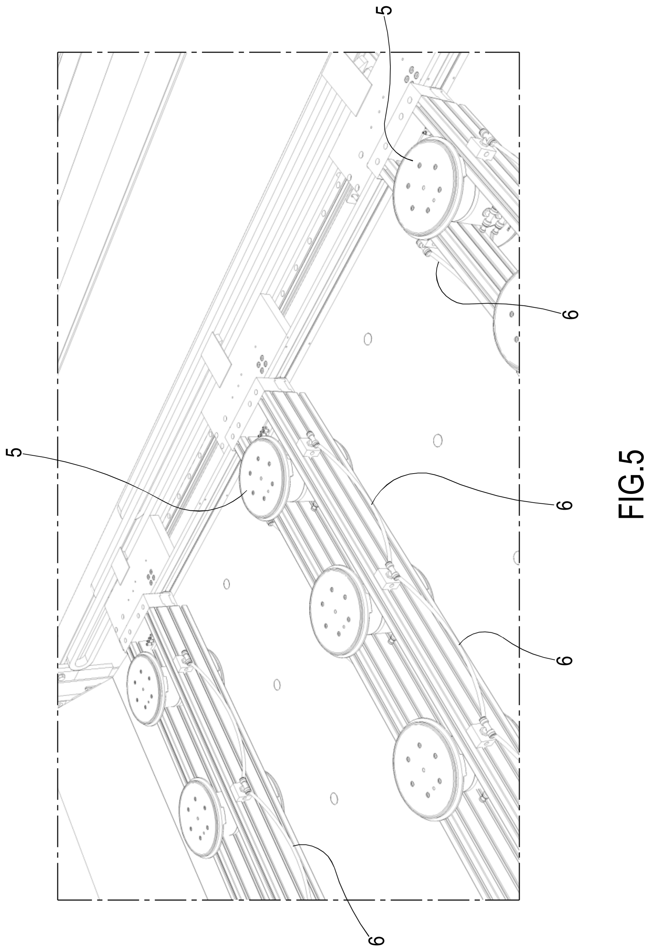

The support device comprises, for each support bar 4, two or more locking devices 5 arranged on the respective support bar with the possibility of sliding along the respective longitudinal axis of the bar itself. Each locking device 5 is slidably coupled to the respective support bar 4 along the respective longitudinal axis of the bar itself. Each support bar 4 may comprise, in particular (as is evident from Figures 4 and 5), two beams parallel to each other and spaced to define a space suitable for the movement of the respective locking devices 5 along the longitudinal axis of the bar.

The locking devices 5 (suction cup members) may be positioned on the work surface 3 and are configured to support the workpiece P (sheet) to be machined. Each locking device 5 may comprise, in particular, a locking member having an upper end (suction cup) that may be coupled with the sheet and a lower end (suction cup) that may be coupled with the work surface 3.

The support device may comprise, in particular, first vacuum supply means (or suction means) that is connected to the lower suction cup ends of the locking devices 5 to generate suction at the aforementioned lower ends of each locking member 5 to lock the locking devices 5 to the work surface 3. The first vacuum supply means may comprise, in particular, one or more pipe connections and at least one actuator (vacuum pump) in turn connected to the aforementioned one or more connections. The first vacuum supply means may therefore be connected to a vacuum source (the aforementioned actuator) so as to be able to engage the locking devices 5 on the work surface 3.

Each support bar 4 may comprise, in particular, at least one handle 8 arranged (on the side of the work surface 3 facing the operator) to allow manual movement of the respective support bar 4.

The support device comprises, for each support bar 4, a control configured to activate or deactivate the first vacuum supply means, so that the locking devices 5 associated with the respective support bar 4 can be engaged and disengaged from the work surface 3 with a single command. This control may be, in particular, a manual control arranged on the respective support bar 4 (for example, near the handle 8 or on the handle itself).

The first vacuum supply means may comprise, in particular, a first pneumatic circuit comprising two or more circuit parts, each of which is arranged on a respective support bar 4 to supply the locking devices 5 of the respective support bar 4.

The first pneumatic circuit may comprise, in particular, at least one external circuit part that is external to the support bars 4 and that is connected to the aforementioned two or more circuit parts of the first pneumatic circuit and to the vacuum source.

The aforementioned external part of the first pneumatic circuit may be arranged, as in this specific example, on an energy chain.

Each of the aforementioned circuit parts of the first pneumatic circuit may comprise, in particular, one or more pneumatic tubes 6, each of which forms a bridge connection arranged to connect two adjacent locking devices 5 of a respective support bar 4.

The support device comprises first blow-off supply means (or means for blowing with pressurized air) connected to the lower suction cup ends of the locking devices 5. The first blow-off supply means may be connected to a source of pressurized air (e.g., a compressor).

It is possible to provide the arrangement of selecting means 9 (e.g., a selector valve) configured to select the connection of the aforementioned lower suction cup ends to the source of pressurized air (compressor) or to the vacuum source (vacuum pump) to selectively set the disengagement configuration (blow-off function) or the engagement configuration (vacuum function).

The first blow supply means may comprise, in particular, the aforementioned first pneumatic circuit which, through the use of the selecting means 9, may selectively serve for the vacuum supply and for the blow supply.

The blowing emitted through the lower suction cup ends of the locking devices 5 serves to generate an air cushion at least at the aforementioned lower end of each locking member 5 to disengage the locking device 5 from the work surface 3 (during the positioning phase), while the vacuum emitted through the aforementioned lower ends serves to lock each locking device 5 on the work surface 3 (during the machining phase of the workpiece P).

The support device comprises second vacuum supply means (or suction means) connected to the upper suction cup ends of the locking devices 5 and connectable to a vacuum source, for example the same actuator (vacuum pump) that generates the suction at the lower ends. The vacuum generated at the upper ends will be used to lock the workpiece P.

The support device comprises, for each support bar 4, a control configured to activate or deactivate the second vacuum supply means, so that the locking devices 5 of the respective support bar 4 may be engaged and disengaged from the workpiece P being machined with a single command.

The second vacuum supply means may comprise, in particular, a second pneumatic circuit comprising two or more circuit parts, each of which is arranged on a respective support bar 4 to supply the locking devices 5 of the respective support bar 4.

The second pneumatic circuit may comprise, in particular, at least one external circuit part that is external to the support bars 4 and that is connected to the aforementioned two or more circuit parts of the second pneumatic circuit and to the vacuum source.

The aforementioned external part of the second pneumatic circuit may be arranged, as in this specific example, on an energy chain (for example, the same energy chain on which the aforementioned external part of the first pneumatic circuit is arranged).

Each of the aforementioned circuit parts of the second pneumatic circuit may comprise, in particular, one or more pneumatic tubes 6, each of which forms a bridge connection arranged to connect two adjacent locking devices 5 of a respective support bar 4.

The support device comprises casing means 7 arranged to protect the external circuit part of the first pneumatic circuit and/or the external circuit part of the second pneumatic circuit.

The aforementioned external circuit part (of the first pneumatic circuit and/or the second pneumatic circuit) may be at least partially extended in length parallel and adjacent to the sliding guiding means to which the support bars 4 are slidably coupled. The casing means 7 may be arranged to also protect the sliding guiding means.

The support device comprises second blow supply means (or blowing means) connected to the aforementioned upper suction cup ends of the locking devices 5. The second blow supply means may be connected to a source of pressurized air, for example the same actuator (compressor) that supplies pressurized air to the first blow supply means. Selecting means 9 may be arranged to select the connection of the upper suction cup ends of the locking devices 5 to the source of pressurized air or to the vacuum source.

The second blow supply means may comprise, in particular, the aforementioned second pneumatic circuit which, through the use of the selecting means 9, can selectively serve for the vacuum supply and for the blow supply.

The support device may comprise, in particular, gripping means that may be moved with one or more axes controlled by the numerical control of the machining center 1 and which is configured to grip and move each support bar 4 and/or each locking device 5 on the work surface. The gripping means may comprise, in particular, suction gripping means, for example a suction cup, engageable with a spindle attachment of the numerically controlled machining head 2.

As mentioned, it is possible to provide an interface element, in particular a flat element (not illustrated), which is coupled to the machining head 2 (for example by means of a cone attachment) and which may be moved by the machining head itself. The interface element is in turn attached by suction to the locking device (using the locking device's suction), which may then be dragged and positioned automatically by the machining head.

Each locking device 5 may comprise, in particular, manually or automatically operated shut-off valve means configured to exclude the respective locking device from operation by interrupting the supply of the operating fluid (under pressure and/or suction).

The machining center may be used to implement a machining method that includes the steps of positioning the locking devices 5 on the work surface 3 and arranging and then locking a workpiece P (sheet) on the locking devices 5. The locked workpiece P may then be machined by the machining head 2.

The preparation of the support device, i.e. the preliminary positioning of the locking devices 5 on the work surface 3, involves positioning the support bars 4 on the work surface in the desired positions. Furthermore, for each support bar 4, the positioning of the locking devices 5 is provided by sliding them on the respective support bar 4.

Each time the workpiece format is changed, it is possible to place the various locking devices 5 on the work surface 3 in the desired positions quickly and easily (for example, using the aforementioned guidance instructions), achieving the purposes and advantages stated above.

In other embodiments, not illustrated, instead of using a lower air cushion to allow the locking devices (suction cups) to be moved on the work surface, it is possible to provide for the use, for each locking device, of sliding means, in particular one or more rolling or sliding elements configured to reduce sliding friction, such as wheels, balls, rollers, pads, etc., which is arranged at the base of the respective locking device and allow it to slide easily on the work surface.

This sliding means is connected to the locking device by elastic means (for example, one or more springs) which is configured to keep the sliding means in contact with the work surface and to slightly support the locking device, keeping it at a short distance from the work surface.

When the locking device needs to be moved on the work surface, the suction on the lower side will be deactivated and the locking device will be able to slide easily, slightly raised, on the work surface thanks to the aforementioned sliding means.

When the locking device needs to be locked onto the work surface, the suction on the lower side will be activated and the suction force, which must be greater than the force of the elastic means, will compress the elastic means, so that the locking device will lower and be able to adhere to the work surface.

## Claims

1. Support device for supporting a workpiece (P) being machined in a machining centre (1), said support device comprising:
- a horizontal work surface (3);
- two or more support bars (4) arranged above said work surface (3), each of said two or more support bars (4) being extended in length along a respective longitudinal axis, said two or more support bars (4) being arranged next to each other and slidably coupled to guiding means with the possibility of performing transverse movements, each with respect to said respective longitudinal axis, so as to be approachable and moveable away from each other;
- for each of said two or more support bars (4), two or more locking devices (5) arranged on the respective support bar (4) with the possibility of sliding along said respective longitudinal axis, each of said two or more locking devices (5) comprising an upper end configured to engage with the workpiece (P) and a lower end configured to engage with said work surface (3).

2. Support device according to claim 1, comprising:
- first vacuum supplying means connected to said lower ends and connectable to a vacuum source so as to be able to engage said two or more locking devices (5) to said work surface (3); and/or
- second vacuum supplying means connected to said upper ends and connectable to a vacuum source so as to be able to engage said two or more locking devices (5) to the workpiece (P).

3. Support device according to claim 1 or 2, comprising:
- first blow supplying means connected to said lower ends and connectable to a pressurized air source to generate an air cushion between said lower ends and said work surface (3); and/or
- second blow supplying means connected to said upper ends and connectable to a pressurized air source to generate an air cushion between said upper ends and the workpiece (P).

4. Support device according to claims 3 and 2, comprising selecting means (9) configured to select the connection of said lower ends to said pressurized air source or to said vacuum source and/or selecting means (9) configured to select the connection of said upper ends to said pressurized air source or to said vacuum source.

5. Support device according to any one of claims 2 to 4, comprising, for each of said two or more support bars (4):
- a control configured to activate or deactivate said first vacuum supplying means; said control being, in particular, a manual control arranged on the respective support bar (4); and/or
- a control configured to activate or deactivate said second vacuum supplying means; said control being, in particular, a manual control arranged on the respective support bar (4); and/or
- a control configured to activate or deactivate said first blow supplying means; said control being, in particular, a manual control arranged on the respective support bar (4); and/or
- a control configured to activate or deactivate said second blow supplying means; said control being, in particular, a manual control arranged on the respective support bar (4).

6. Support device according to any one of claims 2 to 5, wherein:
- said first vacuum supplying means and/or said first blow supplying means comprises a first pneumatic circuit in turn comprising two or more circuit parts each arranged on a respective support bar (4) to supply said two or more locking devices (5) of the respective support bar; each of said two or more circuit parts of said first pneumatic circuit comprising, in particular, one or more pneumatic tubes (6) each arranged to bridge two adjacent locking devices (5) of a respective support bar; and/or
- said second vacuum supplying means and/or said second blow supplying means comprises a second pneumatic circuit in turn comprising two or more circuit parts each arranged on a respective support bar (4) to supply said two or more locking devices (5) of the respective support bar; each of said two or more circuit parts of said second pneumatic circuit comprising, in particular, one or more pneumatic tubes (6) each arranged to bridge two adjacent locking devices (5) of a respective support bar.

7. Support device according to claim 6, wherein:
- said first pneumatic circuit comprises at least one external circuit part which is external to said two or more support bars (4) and is connected to said two or more circuit parts of said first pneumatic circuit and to said vacuum source and/or to said pressurized air source; said at least one external circuit part of said first pneumatic circuit being, in particular, arranged on a cable-carrying chain; and/or
- said second pneumatic circuit comprises at least one external circuit part which is external to said two or more support bars (4) and is connected to said two or more circuit parts of said second pneumatic circuit and to said vacuum source and/or to said pressurized air source; said at least one external circuit part of said second pneumatic circuit being, in particular, arranged on a cable-carrying chain.

8. Support device according to claim 7, comprising casing means (7) arranged to protect said at least one external circuit part of said first pneumatic circuit and/or said at least one external circuit part of said second pneumatic circuit.

9. Support device according to claim 8, wherein said casing means (7) is arranged to protect said guiding means; it being provided, in particular, that said at least one external circuit part of said first pneumatic circuit is at least partially extended in length parallel and contiguously to said guiding means and/or that said at least one external circuit part of said second pneumatic circuit is at least partially extended in length parallel and contiguously to said guiding means.

10. Support device according to any one of the preceding claims, wherein each of said two or more support bars (4) comprises at least one handle (8) arranged to allow manual gripping and movement of the respective support bar (4); being provided, in particular, for each of said two or more support bars (4), a control configured to control at least one function of said two or more locking devices (5) of the respective support bar (4); said control being, in particular, a manual control arranged in proximity to or in correspondence with said handle (8).

11. Support device according to any one of the preceding claims, comprising gripping means which is movable with one or more axes controlled by a numerical control and which is configured to grip and move on said work surface (3) each of said two or more support bars (4) and/or each of said two or more locking devices (5); said gripping means comprising, in particular, suction gripping means, for example a suction cup, engageable with a spindle attachment of a numerically controlled machining head (2).

12. Support device according to any one of the preceding claims, comprising an element engageable, on the one hand, with an attachment of a numerically controlled machining head (2) and, on the other hand, with each of said two or more locking devices (5), so that the machining head (2) can move each of said two or more locking devices (5).

13. Support device according to any one of the preceding claims, wherein each of said two or more locking devices (5) comprises manually or automatically operable cut-off valve means configured to exclude the respective locking device (5) from operation.

14. Numerically controlled machining centre (1) comprising a support device for supporting a workpiece (P) and a machining head (2) with two or more controlled axes for performing machining operations on the workpiece, said support device being made according to any one of the preceding claims.

15. Machining method, in particular implementable in a machining centre (1) according to claim 14, said method comprising the steps of positioning locking devices (5) on a work surface (3) and of arranging and then locking a workpiece (P) to be machined on said locking devices (5), each of said locking devices (5) comprising an upper end configured to engage with the workpiece (P) to be machined and a lower end configured to engage with said work surface (3), said positioning step comprising positioning two or more support bars (4) on said work surface (3) and, for each of said two or more support bars (4), positioning two or more of said locking devices (5) by sliding them on the respective support bar (4).
